# EUROPÄISCHE PATENTSCHRIFT

(11) **EP 0 783 831 B1**
(45) Veröffentlichungstag und Bekanntmachung des Hinweises auf die Patenterteilung: **09.08.2000**
(21) Anmeldenummer: 96119329.9
(22) Anmeldetag: 03.12.1996
(51) Int. Cl.: A01B 17/00

(54) **Wendepflug mit Anbauteil**
Reversible plough with connection part
Charrue réversible avec partie d'accouplement

(30) Priorität: 12.01.1996 DE 19600833
(43) Veröffentlichungstag der Anmeldung: 16.07.1997
(73) Patentinhaber: Gassner, Johann, 85655 Göggenhofen (DE)
(72) Erfinder: Gassner, Johann, 85655 Göggenhofen (DE)
(74) Vertreter: Baumann, Eduard, Dipl.-Phys.

(56) Entgegenhaltungen:
- EP-A- 0 428 087
- AT-A- 374 073
- DE-A- 4 408 715
- DE-B- 1 122 310
- US-A- 3 574 320

## Beschreibung

Die Erfindung bezieht sich auf einen Wendepflug mit einem Anbauteil gemäß dem Oberbegriff des Anspruches 1 und wie in AT-C-374073 beschrieben.

Derartige Wendepflüge dienen in der Regel dem gleichzeitigen Nachbearbeiten des Bodens beim Pflügen, um diesen im wesentlichen einzuebnen und für den Anbau vorzubereiten.

Ein Wendepflug der eingangs angeführten Art ist aus der DE 29 32 824 A1 bekannt. Hier ist seitlich am dreieckförmigen Rand des Wendepfluges ein Anbauteil angebracht, das aus einer parallel zur Fahrtrichtung angeordneten gemeinsamen Längsschiene für die hintereinanderliegende, um eine zumindest annähernd in Fahrtrichtung verlaufende Pendelachse verschwenkbare Anbringung von einzelnen Bearbeitungsgeräten sowie aus zwei seitlichen, jeweils zweigeteilten Tragarmen besteht, die um eine Achse parallel zur gemeinsamen Tragschiene für einen Transport und für den Arbeitsbeginn am Waldrand und dergleichen nach oben verschwenkbar sind.

Ein ähnlicher Wendepflug ist beispielsweise aus der EP 01 80 261 A1 bekannt, wonach einzelne Geräte mittels einer zum Wendepflug parallelen gemeinsamen Schiene um jeweils eine horizontale Schwenkachse nach oben schwenkbar sind. Ein etwas anderes System mit doppelseitigen Bearbeitungseinrichtungen für zwei Bearbeitungsseiten des Wendepfluges ist in der EP 02 22 377 A1 beschrieben. Ein ähnliches Gerät ist aus der DE 28 25 334 A1 bekannt, ein weiteres Gerät ist aus der DE 39 37 820 A1 und der DE 40 28 204 A1 bekannt, wobei ein zur Pfluglängsachse paralleles einseitiges Bearbeitungsgerät vorgesehen ist, bei dem der vordere Teil der gemeinsamen Planierschiene beim Transport nach innen einklappbar ist. Die einzelnen Messer sind höhenverstellbar. Ferner sind dort Pendelarme mit an ihren beiden Enden vorhandenen, zumindest annähernd quer zur Fahrtrichtung verlaufenden Pendelarmen ersichtlich.

Der Erfindung liegt die Aufgabe zugrunde, einen Wendepflug gemäß dem Oberbegriff des Anspruches 1 so auszugestalten, daß der Gesamtaufbau erheblich leichter und einfacher sein kann, und daß der Kraftaufwand für das Schwenken erheblich verringert wird.

Die Aufgabe wird erfindungsgemäß durch den kennzeichnenden Teil des Anspruches 1 gelöst. Weitere Ausgestaltungen der Erfindung sind in den Unteransprüchen unter Schutz gestellt.

Beim Erfindungsgegenstand sind an den zwei seitlichen Tragarmen des Anbauteiles jeweils Pendelarme vorgesehen, zwischen deren freien Enden das jeweilige Bearbeitungsgerät hängt. Eine Begrenzungseinrichtung bewirkt eine Begrenzung der Pendelmöglichkeit des Boden-Bearbeitungsgerätes nach außen und damit die jeweils optimale Arbeitsstellung, sowie beim Rückwärtsstoßen ein automatisches Ausklappen aus dem Acker nach innen; dadurch wird ein Verbiegen des Boden-Bearbeitungsgerätes durch das Einbohren in den Boden vermieden.
Die Pendelarme können mit dem Anbauteil oder mit dem eigentlichen Boden-Bearbeitungsgerät eine auswechselbare Einheit bilden. Die Tragarme können aus mehreren, teleskopartig ineinander verschiebbaren Teilarmen bestehen, um bestimmte Entfernungen und Winkel der Arbeitsgeräte zum Wendepflug bzw. zur Fahrtrichtung einzustellen. Auch eine Kombination mit Dreheinrichtungen über zusätzliche Drehgelenke in den seitlichen Tragarmen ist möglich.

In den Pendelarmen können Höhen-Verstelleinrichtungen, insbesondere in Form von Drehspindeln, die über Drehkurbeln betätigbar sind, vorgesehen werden. Eine bestimmte Dimensionierung der Länge oder Einstellung der mehrgliedrigen Tragarme sowie der Pendelarme ermöglicht einen automatischen Transportanschlag bei bestimmter Drehstellung des Wendepfluges.

Als Universal-Drehgelenk wird zweckmäßigerweise ein Kugelgelenk eingesetzt; dadurch können die vorderen und hinteren Tragarme mittels ihrer Teilarme unterschiedlich weit herausgeschoben werden, der Winkel des Boden-Bearbeitungsgerätes zur Achse des Wendepfluges ist in weiten Grenzen verschiebbar, unabhängig von Toleranzen zwischen den einzelnen Teilen. Das Verstellen der Teilarme kann vorzugsweise durch eine Hydraulikeinrichtung erfolgen. Dann ist sogar während des Betriebes eine Änderung der Bearbeitungsbreite und der Winkeleinstellung möglich. Eine Verstellbarkeit der flexiblen Begrenzungseinrichtung ermöglicht eine stets optimale Anpassung an die jeweiligen Einsatzbedingungen, eine zusätzliche Spanneinrichtung für einen stets straffen Betriebszustand.

Ausführungsbeispiele der Erfindung sind in der Zeichnung dargestellt.

Es zeigt:
Figur 1 eine perspektivische Darstellung eines Wendepfluges mit Anbauteil,
Figur 2 eine Draufsicht auf einen Wendepflug mit Anbauteil und zwei- bzw. dreiteiligen teleskopartigen Tragarmen, ein Boden-Bearbeitungsgerät in Form eines Schneidgerätes sowie eine Begrenzungseinrichtung in Form einer vorderen und einer hinteren flexiblen Kette zwischen Bearbeitungsgerät und Wendepflug bzw. starrem Teil des Tragarmes,
Figur 3 eine schematische Darstellung der Darstellung von Figur 1 von hinten,
Figur 4 eine schematische Darstellung der Darstellung von Figur 1 von hinten in gedrehter Transportstellung,
Figur 5 eine Seitenansicht eines Boden-Bearbeitungsgerätes in Form eines Messergerätes,
Figur 6 die Seitenansicht eines Boden-Bearbeitungsgerätes in Form einer Igelwalze.

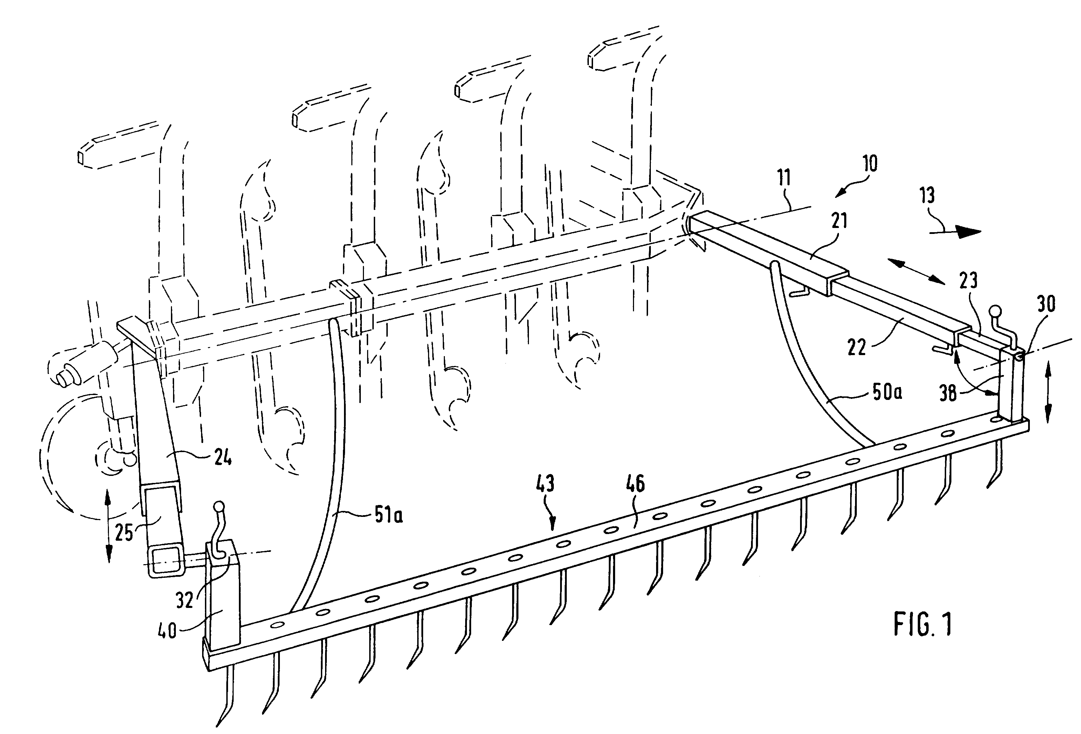

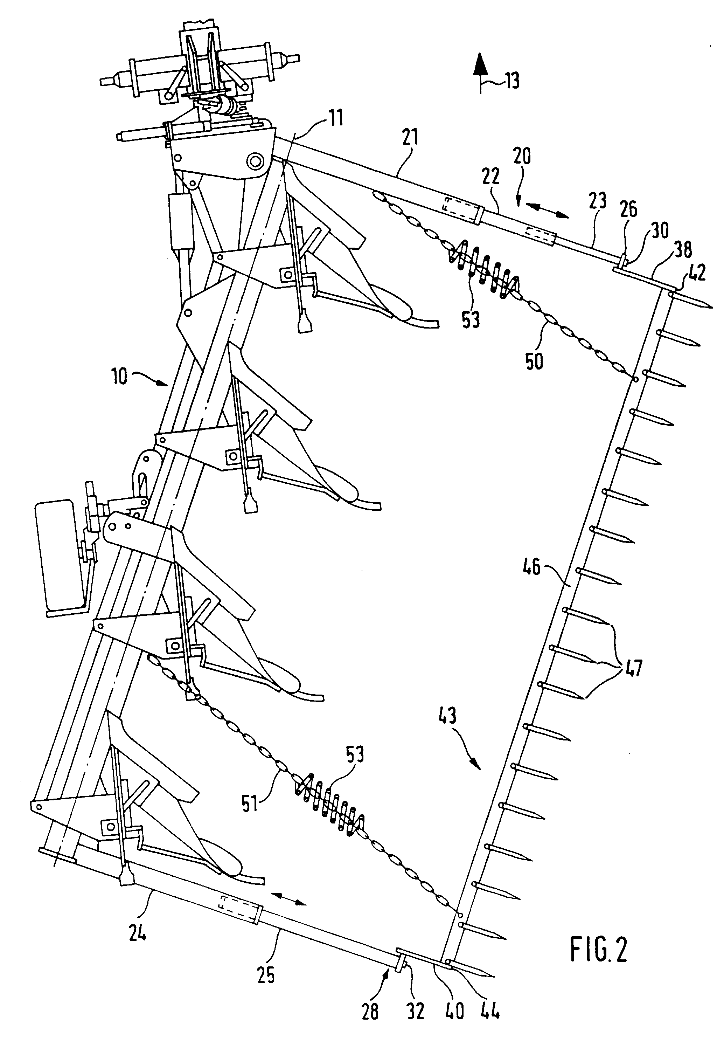

In der Zeichnung sind gleiche Teile mit gleichen Bezugszeichen versehen. So ist in Figur 1 und 2 der Wendepflug allgemein mit 10 bezeichnet, seine Längsachse mit 11. Der Wendepflug hängt an einer Anhängeeinrichtung nebst Dreheinrichtung einer Zugmaschine, wie eines Traktors. Die Fahrtrichtung der Zugmaschine ist mit 13 bezeichnet.

Das Anbauteil des Wendepfluges 10 ist allgemein mit 20 bezeichnet. Im Ausführungsbeispiel von Figur 1 und 2 ist ein seitlicher dreigliedriger vorderer Tragarm und ein zweigliedriger hinterer Tragarm vorgesehen, die bei Arbeitsstellung des Wendepfluges im wesentlichen horizontal und senkrecht von der Längsachse 11 des Wendepfluges 10 wegstehen. Der starre, mit dem Pflug fest verbundene, innere vordere Teilarm 21 und hintere Teilarm 24 ist hohl ausgebildet und nimmt den vorderen äußeren Teilarm 22 und 23 bzw. den hinteren äußeren Teilarm 25 teleskopartig verschiebbar auf. Am äußeren Endabschnitt 26 des dritten vorderen Teilarmes 23 und am äußeren Endabschnitt 28 des zweiten hinteren Teilarmes 25 ist jeweils ein Universalgelenk, wie ein Kugelgelenk 30, 32, vorgesehen, das mit einem Ende eines vorderen Pendelarmes 38 bzw. eines hinteren Pendelarmes 40 verbunden ist.

Am hinteren freien Ende 42, 44 des vorderen und hinteren Pendelarmes 38, 40 sind die Enden des Boden-Bearbeitungsgerätes 43, in Figur 2 in Form eines Messergerätes, vorgesehen. Statt dessen könnte auch beispielsweise eine Egge in gleicher Weise angeordnet sein. Die Längsachse bzw. Längsschiene des Boden-Bearbeitungsgerätes 43 ist mit 46 bezeichnet, die einzelnen Boden-Bearbeitungseinrichtungen, beispielsweise in Form von Messern, sind mit 47 bezeichnet. Die Achse bzw. gemeinsame Längsschiene 46 des Boden-Bearbeitungsgerätes 43 ist im Ausführungsbeispiel von Figur 2 im wesentlichen parallel zur Längsachse 11 des Wendepfluges 10 angeordnet. Es sind jedoch je nach Gerät, Bodenbeschaffenheit und dergleichen andere Einstellungsmöglichkeiten gegeben. Zu Beginn der Arbeit, beispielsweise an einer Straße oder einem Waldrand, kann man den äußeren vorderen und hinteren Tragarm 23, 25 in Pfeilrichtung nach innen verschieben und den ganzen Wendepflug bis zu einem Anschlag auf die andere Seite drehen. Gleiches gilt auch für den Transport. Bei einer bestimmten Drehstellung können hierbei die Pendelarme an Teilen des Wendepfluges anschlagen, oder das Boden-Bearbeitungsgerät 43 schlägt an und bildet dadurch eine verhältnismäßig stabile Lage.

In Figur 1 und 2 ist weiterhin eine Begrenzungseinrichtung vorgesehen, welche die Pendelbewegung des untenliegenden Boden-Bearbeitungsgerätes 43 nach außen begrenzt, jedoch in beliebiger Weise nach innen, d.h. in Richtung Wendepflug 10, ermöglicht. Gemäß Ausführungsbeispiel von Figur 1 ist ein flexibles Seil oder eine mit einer Kunststoffhülse ummantelte Gliederkette 50 a, 51 a vorgesehen, gemäß Ausführungsbeispiel von Figur 2 eine vordere Begrenzungskette 50 zwischen Bearbeitungsgerät 43 und innerem starrem vorderem Teilarm 22, sowie eine hintere flexible Begrenzungskette 51 zwischen Boden-Bearbeitungsgerät 43 und Rahmen des Wendepfluges 10. Eine Zugfedereinrictung 53 an jeder der Begrenzungsketten 50, 51 gemäß Figur 2 sorgt für eine ständige straffe Spannung der felxiblen Begrenzungseinrichtung.

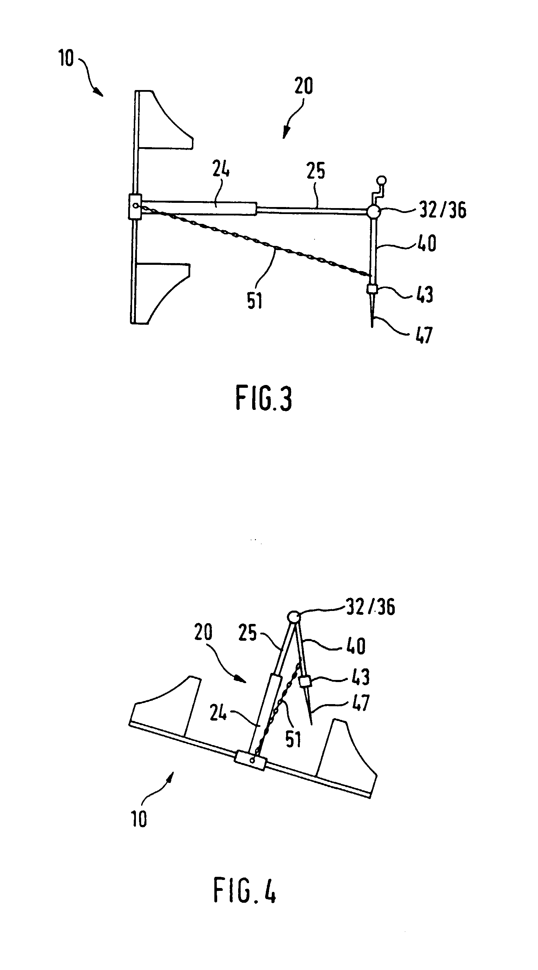

Figur 3 zeigt den in Figur 1 dargestellten Wendepflug 10 mit Anbauteil 20 in gleicher Stellung, nämlich in Arbeitsstellung, von hinten. Hierbei ist unter anderem auch die Kombination von hinterem Drehgelenk 32 und hinterem Gegenlager 36, in Form von Kugel und Pfanne schematisch dargestellt.

Figur 4 zeigt den in Figur 1 und 2 dargestellten Wendepflug mit Anbauteil von hinten, jedoch gegenüber der Arbeitsstellung von Figur 3 in etwa horizontaler Transportstellung nach oben gedreht. Es zeigt sich hierbei, daß auch in dieser Stellung wegen der Pendelarme, von denen nur 40 sichtbar ist, das Boden-Bearbeitungsgerät 43 nach unten gerichtet ist. Es kann an einem - nicht gezeigten - Teil des Wendepfluges 10 anschlagen.

Diese Figur 4 zeigt, daß hier nicht das gesamte schwere Boden-Bearbeitungsgerät zusammen mit einem schweren und stabilen Anbaurahmen um einen großen Schwenkrahmen geschwenkt werden muß, sondern daß das nur einseitige Boden-Bearbeitungsgerät beim Drehen des Wendepfluges nach innen schwenkt, das Drehmoment ist dadurch erheblich verringert, die Konstruktion kann erheblich einfacher sein, der Kraftaufwand ist verringert, es sind auch schwächere Zugmaschinen für den Antrieb eines derartigen Wendepfluges mit Anbauteil geeignet. Die Konstruktion ist dennoch stabiler als die frühere durch Querstreben und schwereres Material verstärkte und stabilisierte Rahmenkonstruktion gemäß der eingangs angeführten Druckschrift DE 29 32 824 A1.

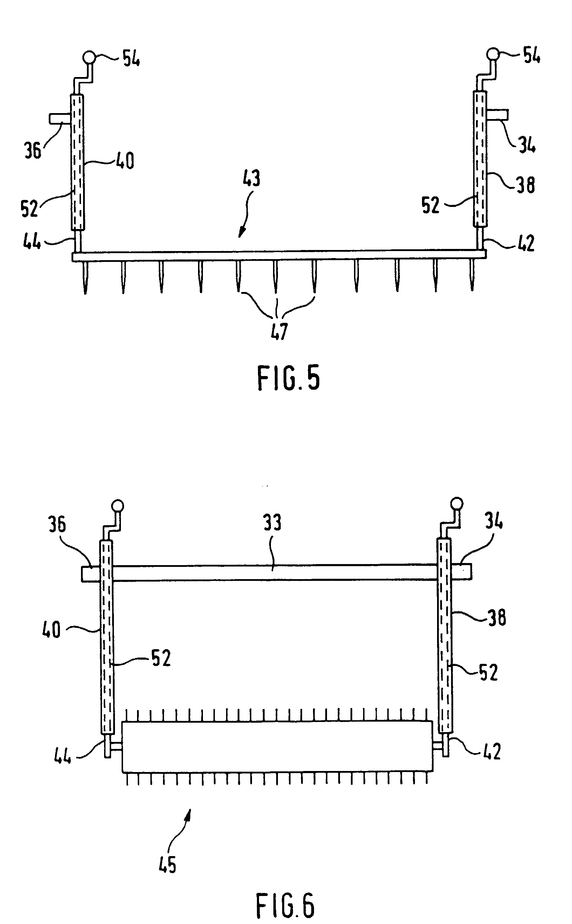

Die Seitenansicht von Figur 5 zeigt ein Messergerät 43 mit senkrecht gegenüber angeordneten Pendelarmen 38, 40, horizontalen Gegenlagern 34, 36 sowie einer vertikalen Verstelleinrichtung in Form von innerhalb der Pendelarme angeordneten Verstellspindeln 52. Diese können mit oberen Drehkurbeln 54 verstellt werden. Das untere Ende 42, 44 der Pendelarme bzw. der Drehspindeln ist mit den beiden Enden des Boden-Bearbeitungsgerätes 43 verbunden.

Figur 6 zeigt eine entsprechende Anordnung bei einem speziellen Boden-Bearbeitungsgerät in Form einer sich bei der Bearbeitung drehenden Krümelwalze oder Igelwalze 45, was automatisch durch die Schrägstellung der Walze zur Fahrtrichtung bewirkt werden kann. Zur größeren Stabilisierung ist hier eine durchgehende Stabilisierungstange 33 vorgesehen, die auch in Höhe der Gegenlager 34, 36 angeordnet werden kann. Statt dessen könnte auch an der unteren Walzenachse eine durchgehende Drehwelle angeordnet werden.

Das Anbauteil des neuen Wendepfluges kann durch die Pendelanordnung der zusätzlichen Boden-Bearbeitungsgeräte am Anbauteil erheblich leichter aufgebaut werden. Beim Wendevorgang am Ende eines Saatbettes dreht sich das ganze Boden-Bearbeitungsgerät um seine Pendelachse nach innen und anschließend auf der anderen Seite wieder nach außen. Dadurch sind nur an einer Seite Boden-Bearbeitungseinrichtungen erforderlich, die stets nach unten zum Boden gerichtet sind. Ein Absetzen und Wiederaufnehmen des Boden-Bearbeitungsgerätes ist nicht erforderlich. Außerdem verringert sich das erforderliche Drehmoment und damit der Kraftaufwand der Wendeeinrichtung stetig.

Beim Anfurchen am Weg- oder Waldrand kann der ganze Pflug mit eingezogenem Anbauteil auf die gegenüberliegende Seite gedreht werden, bis das Anbauteil an einem Anschlagteil des Wendepfluges anliegt.

Statt eines aufwendigen massiven und schweren Stabilisierungsrahmens ist lediglich eine flexible seitliche Begrenzungseinrichtung nach außen vorgesehen, wie ein flexibles vorderes und hinteres Seil, oder eine vordere und hintere Kette, nämlich zwischen Boden-Bearbeitungsgerät und Wendepflug oder den mit dem Wendepflug starr verbundenen Teilarmen der seitlichen Tragarme.

Vorteilhaft ist hierbei die tiefe Aufhängung des Boden-Bearbeitungsgerätes und der daran befestigten Begrenzungseinrichtung, so daß der vom Boden auf das Anbauteil ausgeübte Druck und eine entsprechende Zugbelastung praktisch nicht in Erscheinung treten. Der Eingriff mit dem Boden wird verbessert. Es ist auch ein Rückwärtsfahren bei Einsatzstellung des Anbauteiles möglich, wobei das Boden-Bearbeitungsgerät um die beiden Universalgelenke nach innen schwenkt und sich nicht in den Boden bohrt.

Durch eine Verstellbarkeit der Begrenzungseinrichtung sind bestimmte Winkelstellungen des Boden-Bearbeitungsgerätes zum Boden möglich; durch eine unterschiedliche Einstellung des oder der flexiblen, teleskopartigen vorderen äußeren seitlichen Teilarme im Vergleich zu den entsprechenden hinteren Teilarmen sind unterschiedliche Anstellwinkel des Bearbeitungsgerätes zur Achse des Wendepfluges und zur Fahrtrichtung möglich, je nach Boden-Bearbeitungsgerät, Bodenbeschaffenheit und Wendepflug. Hierzu erfolgt ein Verschwenken um die Universalgelenke.

Die teleskopartigen äußeren Teilarme der seitlichen Tragarme können mechanisch oder automatisch, z. B. hydraulisch, aus- und einfahrbar sowie verriegelbar ausgebildet werden.

## Patentansprüche

1. Wendepflug (10) mit einem Anbauteil (20) für Boden-Bearbeitungsgeräte (43) wie Eggen, Schneidmesser (47), Walzen (45), das zwei seitliche Tragarme (22, 23; 24, 25) zur Halterung der Boden-Bearbeitungsgeräte aufweist, die längs beabstandet sind und zur selben Seite vom Wendepflug (10) wegragen, wobei das Boden-Bearbeitunsgerät (43) infolge der Schwerkraft pendelnd um eine zumindest annähernd in Fahrtrichtung (13) verlaufende Pendelachse stets unten angeordnet ist und die Bearbeitungseinrichtungen des Boden-Bearbeitungsgerätes (43) wie Eggen, Zinken, Messer (47) oder mehrere Boden-Bearbeitungsgeräte einfach, d.h. nur an einer einzigen, stets zum Boden gerichteten Seite, angeordnet sind,
a) dadurch gekennzeichnet, daß am Endabschnitt (26, 28) jedes Tragarmes (22, 23; 24, 25) ein Universal-Drehgelenk (30, 32) vorgesehen ist, das mit einem Ende eines Pendelarmes (38, 40) verbunden ist, und das eine beliebige Pendelbewegung des Boden-Bearbeitungsgerätes (43) nach innen in Richtung Wendepflug (10) erlaubt,
b) jedes Drehgelenk (30, 32) mit einem Gegenlager (34, 36) eines Pendelarmes (38, 40) gelenkig verbunden ist,
c) die beiden Enden der Längsachse (46) des Boden-Bearbeitungsgerätes (43) oder mehrerer Boden-Bearbeitungsgeräte jeweils mit dem freien Ende (42, 44) eines der beiden Pendelarme (23, 25) verbunden sind, und
d) eine flexible Begrenzungseinrichtung, wie ein vorderes und hinteres Begrenzungsseil, eine vordere (50) und hintere Begrenzungskette (51) oder dergleichen, zwischen Wendepflug (10) oder starrem Teilarm (22; 24) der seitlichen Tragarme und Boden-Bearbeitungsgerät (43) vorgesehen ist, die eine beliebige Pendelbewegung des Boden-Bearbeitungsgerätes (43) nach innen in Richtung Wendepflug (10) erlaubt, jedoch beim Betrieb die Pendelbewegung nach außen begrenzt.

2. Wendepflug nach Anspruch 1, dadurch gekennzeichnet, daß die zwei Tragarme (22, 23; 24, 25) die Pendelarme (38, 40) und die flexible Begrenzungseinrichtung (50) eine Einheit bilden und lediglich das jeweils gewünschte Boden-Bearbeitungsgerät (43, 46, 47) leicht auswechselbar ausgebildet ist.

3. Wendepflug nach Anspruch 1, dadurch gekennzeichnet, daß Pendelarme (38, 40) und Boden-Bearbeitungsgerät (43, 46, 47) eine Einheit bilden.

4. Wendepflug nach einem der Ansprüche 1 bis 3, dadurch gekennzeichnet, daß die beiden seitlichen Tragarme (22, 23; 24, 25) starr sind.

5. Wendepflug nach Anspruch 4, dadurch gekennzeichet, daß die Tragarme aus mehreren Teilarmen (22, 23; 24, 25) bestehen, die jeweils teleskopartig ineinander verschiebbar und in jeder gewünschten Stellung feststellbar sind.

6. Wendepflug nach Anspruch 5, dadurch gekennzeichnet, daß der vordere Tragarm aus drei (21, 22, 23) und der hintere Tragarm aus zwei Tragarmen (24, 25) besteht.

7. Wendepflug nach einem der Ansprüche 4 bis 6, gekennzeichnet durch je ein Kugelgelenk aus Kugel und Pfanne, zwischen dem freien Ende jedes Tragarmes und dem daran angelenkten Pendelarm (38, 40).

8. Wendepflug nach einem der Ansprüche 5 bis 7, dadurch gekennzeichnet, daß durch unterschiedliche Einstellungen von vorderen (21, 22, 23) und hinteren Teilarmen (24, 25) der beiden Tragarme der Winkel der Geräteachse (46) zur Längsachse (11) des Wendepfluges (10) und zur Fahrtrichtung (13 des Zugfahrzeuges verstellbar ist,
entsprechend einer Transport-Querlage des Wendepfluges, einer grenznahen Arbeitsanfangslage, beispielsweise an einem Waldrand unter Drehung des Wendepfluges auf die gegenüberliegende Seite, einer weiter ausgefahrenen Normalbetriebsstellung und dergleichen.

9. Wendepflug nach einem der Ansprüche 1 - 3, gekennzeichnet durch mehrteilige seitliche Tragarme, zwischen denen horizontale oder vertikale Gelenkverbindungen vorgesehen sein können, um ein Schwenken der Pendelarme (38, 40) nebst Boden-Bearbeitungsgerät (41, 43, 45) um eine horizontale Achse oder eine vertikale Achse zu ermöglichen.

10. Wendepflug nach einem der Ansprüche 5 bis 9, gekennzeichnet durch hydraulische Verstelleinrichtungen zum unabhängigen Verstellen der Teleskop-Teilarme des vorderen und des hinteren Tragarmes, auch während des Betriebes zur Arbeitsbreitenverstellung des Boden-Bearbeitungsgerätes.

11. Wendepflug nach einem der Ansprüche 1 - 10, gekennzeichnet durch Höhen-Verstelleinrichtungen an jedem der Pendelarme (38, 40) zur Einstellung des Bodenabstandes ihrer freien Enden, an welchen die beiden Enden (42, 44) des Boden-Bearbeitungsgerätes (43) befestigbar sind.

12. Wendepflug nach Anspruch 11, dadurch gekennzeichnet, daß die Verstelleinrichtung eine innerhalb jedes Pendelarmes (38, 40) angeordnete Drehspindel (52) ist, die vorzugsweise über eine Drehkurbel (54) im Bereich der Gegenlager (34, 36) betätigbar ist.

13. Wendepflug nach einem der Ansprüche 5 - 12, gekennzeichnet durch eine derartige Dimensionierung der Länge der Tragarme (21, 22, 23; 24, 25) und der Pendelarme (38, 40), daß bei im wesentlichen in eine horizontale Stellung gedrehtem Wendepflug (10) die freien Enden der Pendelarme (38, 40) oder des Boden-Bearbeitungsgerätes (41, 43, 45) an Teilen (56) des Wendepfluges (10) zur Bildung eines Anschlages beim Transport und insbesondere bei einer grenznahen Arbeitsanfangslage anliegen.

14. Wendepflug nach einem der Ansprüche 1 - 13, gekennzeichnet durch eine Verstelleinrichtung für die flexible Begrenzungseinrichtung nach außen zur Einstellung der jeweils optimalen Arbeitsstellung des Boden-Bearbeitungsgerätes.

15. Wendepflug nach einem der Ansprüche 1 - 14, gekennzeichnet durch eine Spanneinrichtung, wie eine Zugfedereinrichtung (53), für die flexible Begrenzungseinrichtung.

## Revendications

1. Charrue réversible (10) avec une partie annexe (20) pour des instruments aratoires (43), tels que des herses, des couteaux (47), des rouleaux (45), pourvue de deux bras porteurs latéraux (22, 23; 24, 25) destinés à supporter les instruments aratoires, lesdits bras étant disposés à distance dans le sens de la longueur et faisant saillie sur le même côté de la charrue de labour (10), l'instrument aratoire (43) étant disposé, à cause de la force de gravitation, de façon à osciller autour d'un essieu oscillant orienté approximativement dans la direction de marche (13), et toujours en bas et les organes de travail de l'instrument aratoire (43), tels que les herses, les dents, les couteaux (47) ou plusieurs instruments aratoires, étant positionnés unilatéralement, c'est-à-dire sur un seul côté toujours orienté vers le sol, caractérisé en ce que
a) un joint universel de Cardan (30, 32) est prévu dans la section terminale (26, 28) de chaque bras porteur (22, 23 ; 24, 25), ledit joint universel de cardan étant relié à une extrémité d'un bras oscillant (38, 40) et permettant un mouvement d'oscillation quelconque de l'instrument aratoire (43) vers l'intérieur en direction de la charrue réversible (10),
b) chaque joint de Cardan (30, 32) est articulé à une contre-portée (34, 36) d'un bras oscillant (38, 40),
c) les deux extrémités de l'axe longitudinal (46) de l'instrument aratoire (43) ou de plusieurs instruments aratoires sont reliées chacune à l'extrémité libre (42, 44) de l'un des deux bras oscillants (23, 25) et
d) un dispositif flexible de délimitation, tel qu'un câble limiteur de course avant et arrière, une chaîne limiteuse avant (50) et arrière (51) ou autre, est prévu entre la charrue réversible (10) ou le bras partiel rigide (22; 24) des bras porteurs latéraux et l'instrument aratoire (43), ledit dispositif permettant un mouvement d'oscillation quelconque de l'instrument aratoire (43) vers l'intérieur dans la direction de la charrue réversible (10), mais limitant le mouvement d'oscillation vers l'extérieur pendant le fonctionnement dudit instrument.

2. Charrue réversible selon la revendication 1, caractérisée en ce que les deux bras porteurs (22, 23; 24, 25), les bras oscillants (38, 40) et le dispositif flexible de délimitation (50) forment une unité et que seul l'instrument aratoire (43, 46, 47) désiré est conçu de façon à pouvoir être échangé facilement.

3. Charrue réversible selon la revendication 1, caractérisée en ce que les bras oscillants (38, 40) et l'instrument aratoire (43, 46, 47) forment une unité.

4. Charrue réversible selon l'une des revendications 1 à 3, caractérisée en ce que les deux bras porteurs latéraux (22, 23; 24, 25) sont rigides.

5. Charrue réversible selon la revendication 4, caractérisée en ce que les bras porteurs consistent en plusieurs bras partiels (22, 23; 24, 25) qui peuvent s'emboîter les uns dans les autres de façon télescopique et qui peuvent être arrêtés dans n'importe quelle position désirée.

6. Charrue réversible selon la revendication 5, caractérisée en ce que le bras porteur avant consiste en trois bras porteurs (21, 22, 23) et le bras porteur arrière, en deux bras porteurs (24, 25).

7. Charrue réversible selon l'une des revendications 4 à 6, caractérisée par une articulation à rotule composée d'une tête d'articulation et d'un coussinet à rotule disposée entre l'extrémité libre de chaque bras porteur et le bras oscillant (38, 40) qui y est articulé.

8. Charrue réversible selon l'une des revendications 5 à 7, caractérisée en ce que, en variant l'ajustement des bras partiels avants (21, 22, 23) et arrières (24, 25) des deux bras porteurs, l'angle de l'axe de l'instrument (46) par rapport à l'axe longitudinal (11) de la charrue de labour (10) et à la direction de marche (13) du véhicule de traction est réglable suivant une inclinaison latérale de transport de la charrue de labour, une situation initiale de travail en bordure, à l'orée d'une forêt par exemple, en faisant tourner la charrue de labour sur le côté opposé, une position de service normale et autres.

9. Charrue réversible selon l'une des revendications 1 - 3, caractérisée par des bras porteurs latéraux constitués de plusieurs parties entre lesquelles des joints articulés horizontaux ou verticaux peuvent être prévus afin de permettre aux bras oscillants (38, 40) et à l'instrument aratoire (41, 43, 45) de pivoter autour d'un axe horizontal ou d'un axe vertical.

10. Charrue réversible selon l'une des revendications 5 à 9, caractérisée par des variateurs hydrauliques permettant de varier indépendamment les bras partiels télescopiques des bras porteurs avant et arrière et ce, même pendant le service afin de varier la largeur de travail de l'instrument aratoire.

11. Charrue réversible selon l'une des revendications 1 - 10, caractérisée par des variateurs de hauteur prévus sur chaque bras oscillant (38, 40) destinés à régler la distance au sol de leurs extrémités libres, auxquels peuvent être fixées les deux extrémités (42, 44) de l'instrument aratoire (43).

12. Charrue réversible selon la revendication 11, caractérisée en ce que le variateur consiste en une broche de tour (52) disposée à l'intérieur de chaque bras oscillant (38, 40), ladite broche de tour pouvant être actionnée de préférence au moyen d'une manivelle (54) dans la région des contre-portées (34, 36).

13. Charrue réversible selon l'une des revendications 5 - 12, caractérisée en ce que les bras porteurs (21, 22, 23; 24, 25) et les bras oscillants (38, 40) sont dimensionnés de telle sorte que, quand la charrue réversible (10) est essentiellement tournée dans une position horizontale, les extrémités libres des bras oscillants (38, 40) ou de l'instrument aratoire (41, 43, 45) reposent contre des parties (56) de la charrue réversible (10) pour y former une butée pendant le transport et particulièrement lors d'une situation initiale de travail en bordure.

14. Charrue réversible selon l'une des revendications 1 - 13, caractérisée par un variateur pour le dispositif flexible de délimitation vers l'extérieur permettant de toujours placer l'instrument aratoire dans la meilleure position de travail possible.

15. Charrue réversible selon l'une des revendications 1 - 14, caractérisée par un dispositif de serrage, un dispositif de ressort de traction (53) par exemple, pour le dispositif de délimitation flexible.

## Claims

1. A two-way plough (10) with an add-on part (20) for tilling machines (43) such as harrows, cutting knives (47) or rollers (45), which has two laterally placed support arms (22, 23; 24, 25) to hold the tilling machines, which are spaced longitudinally and project away to the same side of the two-way plough (10), in which the tilling machine (43), due to gravity, is arranged always downwards oscillating in pendulum fashion around a pendulum axis which extends at least approximately in the direction of movement (13) and the tilling devices of the tilling machine (43), such as harrows, prongs, knives (47) or a plurality of tilling devices are singly arranged, i.e. only on one single side which is directed constantly towards the soil,
characterised in that
a) on the end section (26, 28) of each support arm (22, 23; 24, 25) there is a universal revolute joint (30, 32), which is connected at one end of an oscillating arm (38, 40) and which allows a discretionary oscillating movement of the tilling machine (43) inwardly in the direction of the two-way plough (10),
b) each revolute joint (30, 32) is connected flexibly with a counter-bearing (34, 36) of an oscillating arm (28, 40),
c) the two ends of the longitudinal axis (46) of the tilling machine (43) or a plurality of tilling machines are connected respectively with the free end (42, 44) of one of the two oscillating arms (23, 25), and
d) a flexible limit device, such as a front and rear limit cable, a front (50) and rear limit chain (51) or the like, is provided between the two-way plough (10) or a rigid partial arm (22; 24) of the lateral support arms and the tilling machine (43), which permits a discretionary pendulum movement of the tilling machine (43) inwardly in the direction of the two-way plough (10), but when in operation it limits the pendulum movement to the exterior.

2. A two-way plough in accordance with claim 1, characterised in that the two support arms (22, 23; 24, 25), the oscillating arms (38, 40) and the flexible limit device (50) form a unit and only the respectively desired tilling machine (43, 46, 47) is designed to be easily replaceable.

3. A two-way plough in accordance with claim 1, characterised in that the oscillating arms (38, 40) and the tilling machine (43, 46, 47) form a unit.

4. A two-way plough in accordance with one of claims 1 to 3, characterised in that the two support arms at the sides (22, 23; 24, 25) are rigid.

5. A two-way plough in accordance with claim 4, characterised in that the support arms consist of a plurality of partial arms (22, 23; 24, 25), which can be moved respectively into each other in the manner of a telescope and which can be fixed in any desired position.

6. A two-way plough in accordance with claim 5, characterised in that the front support arm consists of three support arms (21, 22, 23) and the rear support arm consists of two support arms (24, 25).

7. A two-way plough in accordance with one of claims 4 to 6, characterised respectively by a ball joint consisting of a ball and a socket, between the free end of each support arm and the oscillating arm (38, 40) which is hinged thereon.

8. A two-way plough in accordance with one of claims 5 to 7, characterised in that by different adjustments of the front (21, 22, 23) and rear support arms (24, 25) of the two support arms, the angle of the machine axis (46) to the longitudinal axis (11) of the two-way plough (10) and to the direction of movement (13) of the tractor can be adjusted, in accordance with a transport transverse position of the two-way plough, a near limit working initial position, e.g. on the edge of a wood with rotation of the two-way plough to the opposite side, a further extended normal operating position and the like.

9. A two-way plough in accordance with one of claims 1 to 3, characterised by multi-part lateral support arms, between which horizontal or vertical joint connections can be provided, in order to make possible the pivoting of the oscillating arms (38, 40) together with the tilling machine (41, 43, 45) around a horizontal axis or a vertical axis.

10. A two-way plough in accordance with one of claims 5 to 9, characterised by hydraulic setting devices for independently setting the telescopic partial arms of the front and of the rear support arm, also during operation for the adjustment of the working width of the tilling machine.

11. A two-way plough in accordance with one of claims 1 to 10, characterised by height adjustment devices on each of the oscillating arms (38, 40) for the adjustment of the soil distance from its free ends, at which the two ends (42, 44) of the tilling machine (43) can be secured.

12. A two-way plough in accordance with claim 11, characterised in that the setting device is a rotary spindle (42) arranged within each oscillating arm (38, 40), which rotary spindle (52) can preferably be activated via a rotary crank (54) in the zone of the counter-bearing (34, 36).

13. A two-way plough in accordance with one of claims 5 to 12, characterised by such dimensions of the length of the support arms (21, 22, 23; 24, 25) and of the oscillating arms (38, 40), that given a two-way plough (10) which is substantially rotated into a horizontal position, the free ends of the oscillating arms (38, 40) or of the tilling machine (41, 43, 45) make contact with parts (56) of the two-way plough (10), in order to form a stop during transport and, in particular, in the case of an initial working position which is near the limit.

14. A two-way plough in accordance with one of claims 1 to 13, characterised by a setting device for the flexible limit device to the exterior in order to adjust the respectively optimal working position of the tilling device.

15. A two-way plough in accordance with one of claims 1 to 14, characterised by a tension device such as a traction spring device (53), for the flexible limit device.
